# EUROPÄISCHE PATENTSCHRIFT

(11) **EP 3 862 617 B1**
(45) Veröffentlichungstag und Bekanntmachung des Hinweises auf die Patenterteilung: **25.10.2023**
(21) Anmeldenummer: 20186107.7
(22) Anmeldetag: 16.07.2020
(51) Int. Cl.: F16P 3/12

(54) **VORRICHTUNG ZUR SICHERUNG EINES GEFAHRENBEREICHS**
DEVICE FOR SECURING A HAZARDOUS AREA
DISPOSITIF DE SÉCURISATION D'UNE ZONE DANGEREUSE

(30) Priorität: 06.02.2020 DE 202020100644 U
(43) Veröffentlichungstag der Anmeldung: 11.08.2021
(73) Patentinhaber: Leuze electronic GmbH + Co. KG, 73277 Owen/Teck (DE)
(72) Erfinder: Rohbeck, Volker, 85244 Röhrmoos (DE); Eder, Alexander, 86928 Hofstetten (DE); Erdorf, Markus, 81373 München (DE); Feller, Bernhard, 86316 Friedberg (DE)
(74) Vertreter: Ruckh, Rainer Gerhard

(56) Entgegenhaltungen:
- EP-A1- 3 330 740
- DE-B3- 10 312 972

## Beschreibung

Die Erfindung betrifft eine Vorrichtung zur Sicherung eines Gefahrenbereichs.

Derartige Vorrichtungen können zur Sicherung von Gefahrenbereichen an stationären Maschinen oder Anlagen vorgesehen sein, wobei dort ein Gefahrenbereich, in welchem von der Maschine oder Anlage gefahrbringende Bewegungen ausgeführt werden, abzusichern ist.

Weiterhin können derartige Vorrichtungen zur Sicherung des Vorfelds an Fahrzeugen eingesetzt werden, um einen Kollisionsschutz für das Fahrzeug zu realisieren.

In beiden Fällen ist es bekannt, distanzmessende optische Sensoren zur Überwachung von Gefahrenbereichen einzusetzen, wobei diese beispielsweise als Flächendistanzsensor, das heißt als scannende Distanzsensoren, ausgebildet sein können.

Zur Anpassung an verschiedene beziehungsweise sich ändernde Gefahrenbereiche ist es bekannt, dass im optischen Sensor unterschiedliche Schutzfelder gespeichert sind. Je nach Gefahrensituation wird im optischen Sensor ein Schutzfeld aktiviert, sodass innerhalb dieses vorgegebenen Schutzfelds eine Objektüberwachung erfolgt.

Im optischen Sensor wird dann abhängig davon, ob im vorgegebenen Schutzfeld ein Objekt detektiert wird, ein binäres Schaltsignal mit einem entsprechenden Schaltzustand erzeugt. Nimmt das Schaltsignal bei einer Objektdetektion den Schaltzustand "Objekt vorhanden" ein, wird eine Sicherheitsfunktion ausgelöst, wodurch ein sicherer Betriebszustand herbeigeführt wird, der Gefährdungen von Personen vermeidet. Bei der Überwachung einer gefahrbringenden stationären Maschine oder Anlage kann die Sicherheitsfunktion darin bestehen, die Maschine oder Anlage stillzusetzen. Bei der Überwachung eines Fahrzeugs kann die Sicherheitsfunktion darin bestehen, das Fahrzeug anzuhalten.

Die DE 103 12 972 B3 betrifft einen optischen Sensor mit einem Distanzsensorelement, bestehend aus einem Sendelichtstrahlen emittierenden Sender und einem Empfangslichtstrahlen empfangenden Empfänger. Mittels einer Ablenkeinheit werden die Sendelichtstrahlen abgelenkt, so dass diese periodisch einen Überwachungsbereich überstreichen. In einer Auswerteeinheit sind als Parameter mehrere Schutzfelder abgespeichert, welche jeweils vorgegebene Bereiche des Überwachungsbereichs bilden, wobei wenigstens eines der abgespeicherten Schutzfelder aktivierbar ist. In der Auswerteeinheit wird in Abhängigkeit der Empfangssignale am Ausgang des Empfängers ein Objektfeststellungssignal generiert, welches angibt, ob sich ein Objekt innerhalb des aktivierten Schutzfeldes befindet oder nicht. An die Auswerteeinheit ist eine Kommunikationsschnittstelle angeschlossen, über welche Aktivierungssignale zur Aktivierung des Schutzfeldes einlesbar sind.

Die EP 3 330 740 A1 betrifft ein Verfahren zur Erfassung von Objekten in einem Erfassungsbereich und umfasst einen optischen Sensor mit einer Sensorsignale generierenden Sensoreinheit und eine Auswerteeinheit, in welcher die Sensorsignale ausgewertet werden. In der Auswerteeinheit ist ein innerhalb des Erfassungsbereichs liegendes, von einer Schutzfeldgrenze begrenztes Schutzfeld vorgegeben. In der Auswerteeinheit wird ein Objektfeststellungssignal generiert, wenn anhand der Sensorsignale ein Eindringen eines unzulässigen Objekts in das Schutzfeld registriert wird. Bei Erfassen des Eindringens einer zulässigen Objektstruktur wird über einen Teil der Schutzfeldgrenze in das Schutzfeld mittels der Sensoreinheit in der Auswerteeinheit dieser Teil der Schutzfeldgrenze durch die Kontur der zulässigen Objektstruktur ersetzt.

Der Erfindung liegt die Aufgabe zugrunde eine Vorrichtung der eingangsgenannten Art bereitzustellen, mittels derer eine verbesserte Sicherung von Gefahrenbereichen ermöglicht wird.

Zur Lösung dieser Aufgabe sind die Merkmale des Anspruchs 1 vorgesehen.

Die Erfindung betrifft eine Vorrichtung zur Sicherung eines Gefahrenbereichs, mit wenigstens einem distanzmessenden optischen Sensor, der für eine Objekterfassung in einem flächigen oder räumlichen Erfassungsbereich ausgebildet ist. Zur Absicherung des Gefahrenbereichs wird mit dem optischen Sensor eine Objektüberwachung innerhalb wenigstens eines vorgegebenen Schutzfelds durchgeführt. Mittels eines Steuersignals ist die Objektüberwachung im vorgegebenen Schutzfeld deaktivierbar. Abhängig von einem im Gefahrenbereich vorhandenen Objekt wird wenigstens ein neues Schutzfeld generiert, innerhalb dessen der optische Sensor die Objektüberwachung weiterführt. Das neue Schutzfeld ist für eine vorgegebene Aktivierungszeit deaktiviert. Nach Ablauf der Aktivierungszeit führt der optische Sensor wieder die Objektüberwachung innerhalb des vorgegebenen Schutzfelds durch.

Der Grundgedanke der Erfindung besteht somit darin, mit dem Steuersignal gezielt die mit dem optischen Sensor durchgeführte Objektüberwachung zu verändern und an sich ändernde Randbedingungen anzupassen.

Das von einer externen Einheit in den optischen Sensor eingelesene Steuersignal kann insbesondere eine Störung signalisierende, beispielsweise Ablaufstörung einer zu überwachenden Anlage sein.

Die Überwachungsfunktion der erfindungsgemäßen Vorrichtung ist generell derart ausgebildet, dass im optischen Sensor ein Schaltsignal generiert wird, dessen Schaltzustände angeben, ob sich ein Objekt im Schutzfeld befindet oder nicht.

Dabei wird mit einem ein Objekt im Schutzfeld signalisierenden Schaltsignal eine Sicherheitsfunktion ausgelöst.

Die Sicherheitsfunktion kann darin bestehen, dass eine mit dem optischen Sensor überwachte Anlage von der Gefährdungen für Personen ausgehen können, stillgesetzt wird.

Bei der erfindungsgemäßen Vorrichtung wird im regulären Betrieb eine Objektüberwachung in einem vorgegebenen Schutzfeld durchgeführt. Damit werden sicherheitskritische Objekte im Schutzfeld erfasst, wobei eine solche Objekterfassung zur Generierung eines Schaltsignals und abhängig hiervon zur Auslösung einer Sicherheitsfunktion führt.

Das vorgegebene Schutzfeld ist dabei so dimensioniert, dass zulässige Objekte, die nicht zu Gefährdungen führen, nicht in das vorgegebene Schutzfeld eindringen.

Ein Beispiel hierfür ist eine Zugangssicherung zur Absicherung eines Zugangs zu einer gefahrbringenden Anlage. Insbesondere wird dann mit dem optischen Sensor ein Gefahrenbereich an einer Fördereinheit überwacht, auf welcher Fördergüter der Anlage zugeführt werden. Die Fördergüter stellen zulässige Objekte dar, die nicht zu Gefährdungen führen.

In diesem Fall wird das Steuersignal von der Steuerung der Fördereinheit generiert.

Das vorgegebene Schutzfeld ist dann so dimensioniert, dass die Fördergüter nicht in dieses vorgegebene Schutzfeld ragen. Hierzu ist das vorgegebene Schutzfeld an die maximale Größe der Fördergüter angepasst.

Wird erfindungsgemäß das Steuersignal aktiviert und dadurch die Objektüberwachung innerhalb des vorgegebenen Schutzfelds deaktiviert, so wird dabei der Zustand der aktuellen Objektüberwachung im vorgegebenen Schutzfeld ausgenutzt.

Wird aktuell ein Objekteingriff im vorgegebenen Schutzfeld registriert, generiert der optische Sensor das Schaltsignal, das zur Generierung der Sicherheitsfunktion führt.

Wird dagegen im optischen Sensor kein Objekt im vorgegebenen Schutzfeld erkannt, kann im Erfassungsbereich dieses optischen Sensors nur ein zulässiges Objekt außerhalb des vorgegebenen Schutzfelds angeordnet sein.

Dieses Vorwissen wird für die erfindungsgemäße Betriebsartänderung bei Vorlegen des Steuersignals ausgenutzt. Da nur ein zulässiges Objekt im Erfassungsbereich des optischen Sensors liegen kann, wird abhängig von diesem ein neues Schutzfeld generiert.

Das neue Schutzfeld kann prinzipiell kleiner sein als das vorgegebene Schutzfeld, vorteilhaft ist dieses jedoch größer.

Generell wird das neue Schutzfeld so dimensioniert, dass das im Gefahrenbereich vorhandene Objekt nicht in das neue Schutzfeld ragt, und somit als zulässiges Objekt behandelt wird. Vorteilhaft wird hierzu bei Aktivieren des Steuersignals mittels des optischen Sensors die Kontur des im Gefahrenbereich vorhandenen Objekts als Referenzkontur eingelernt. Abhängig von der Referenzkontur wird die Grenze des neuen Schutzfelds bestimmt.

Damit ist auf einfache und sichere Weise eine Unterscheidung dieses zulässigen Objekts von gefahrbringenden, sicherheitskritischen Objekten möglich, da nur die sicherheitskritischen Objekte zu einem Eingriff in das neue Schutzfeld führen, nicht jedoch das zuvor eingelernte zulässige Objekt, an welches die Größe des neuen Schutzfelds angepasst ist.

Für den Fall, dass mit dem optischen Sensor ein Gefahrenbereich an einer Fördereinheit überwacht wird, kann beispielsweise die Steuerung der Fördereinheit das Steuersignal generieren, wenn die Fördereinheit aufgrund einer Störung oder dergleichen angehalten wird.

In diesem Fall kann gerade ein zulässiges Objekt, das heißt ein Fördergut, im Gefahrenbereich vorhanden sein. Da bei Generierung des Steuersignals das neue Schutzfeld an dieses zulässige Objekt so angepasst ist, dass das zulässige Objekt vom neuen Schutzfeld ausgespart ist, führt dieses nicht zu einer unnötigen Generierung eines Schaltsignals und damit auch nicht zu einer unnötigen Auslösung der Sicherheitsfunktion.

Dringt dagegen ein nicht zulässiges Objekt in den Gefahrenbereich ein, wird dieses auf jeden Fall im neuen Schutzfeld erkannt, da das neue Schutzfeld an die Kontur des zulässigen Objekts angepasst ist, und das zusätzliche nicht zulässige Objekt zwangsläufig zu einer Schutzfeldverletzung führt. Damit wird im optischen Sensor ein Schaltsignal generiert, das zur Auslösung der Sicherheitsfunktion führt, sodass eine sichere Erfassung von sicherheitskritischen Objekten gewährleistet ist.

Erfindungsgemäß ist das neue Schutzfeld für eine vorgegebene Aktivierungszeit aktiviert. Nach Ablauf der Aktivierungszeit führt der optische Sensor wieder die Objektüberwachung innerhalb des vorgegebenen Schutzfelds durch.

Mit dem Steuersignal wird somit nur temporär eine Betriebsartänderung des optischen Sensors durchgeführt, vorteilhaft nur so lange wie ein Störfall, der zur Auflösung des Steuersignals führt, vorhanden ist.

Zweckmäßig entspricht die Aktivierungszeit der Zeitdauer der Aktivierung des Steuersignals.

Damit gibt das Steuersignal unmittelbar die Aktivierungszeit vor.

Gemäß einer vorteilhaften Ausführungsform ist der optische Sensor ein Flächendistanzsensor oder ein Kamerasensor.

Weiter vorteilhaft ist der optische Sensor ein Sicherheitssensor.

Damit kann der optische Sensor und auch die gesamte Vorrichtung im Bereich der Sicherheitstechnik, insbesondere im Bereich des Personenschutzes eingesetzt werden. Der als Sicherheitssensor ausgebildete optische Sensor weist hierzu einen fehlersicheren Aufbau auf. Dies wird vorteilhaft dadurch erreicht, dass der optische Sensor eine redundante Auswerteeinheit aufweist, insbesondere in Form zweier sich zyklisch überwachender Rechnereinheiten.

Gemäß einer vorteilhaften Weiterbildung weist die erfindungsgemäße Vorrichtung eine Mehrfachanordnung von optischen Sensoren auf.

Dabei kann mit einem optischen Sensor ein oder mehrere Schutzfelder überwacht werden.

Die Erfindung wird im Folgenden anhand der Zeichnungen erläutert. Es zeigen:
- Figur 1:: Erstes Ausführungsbeispiel eines optischen Sensors.
- Figur 2:: Zweites Ausführungsbeispiel eines optischen Sensors.
- Figur 3:: Drittes Ausführungsbeispiel eines optischen Sensors.
- Figur 4:: Erstes Ausführungsbeispiel der erfindungsgemäßen Vorrichtung mit einem optischen Sensor bei einer Objektüberwachung innerhalb eines vorgegebenen Schutzfeldes.
- Figur 5:: Anordnung gemäß Figur 4 bei einer Objektüberwachung innerhalb eines temporären neuen Schutzfelds.
- Figur 6:: Zweites Ausführungsbeispiel der erfindungsgemäßen Vorrichtung mit zwei optischen Sensoren bei einer Objektüberwachung innerhalb vorgegebener Schutzfelder.
- Figur 7:: Anordnung gemäß Figur 6 bei einer Objektüberwachung innerhalb temporärer neuer Schutzfelder.

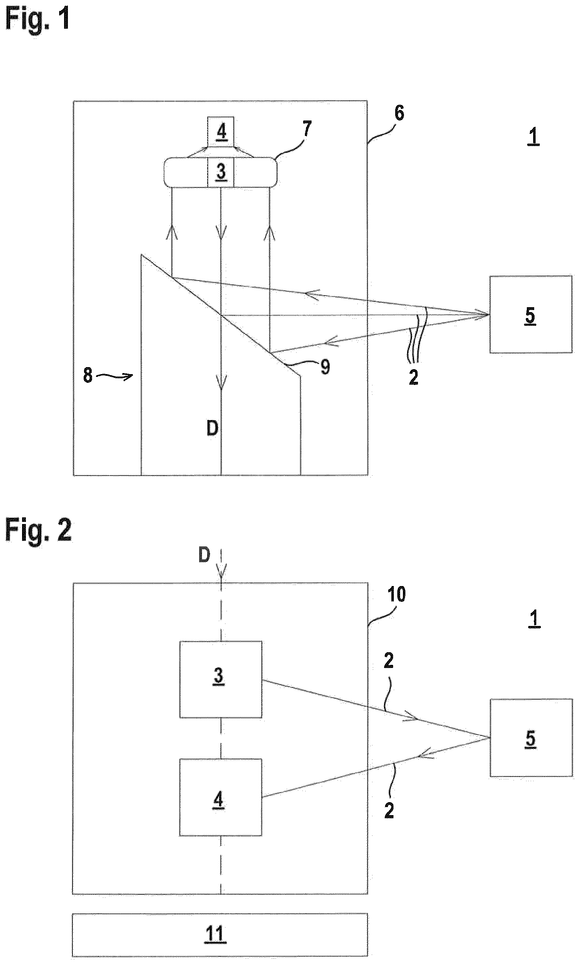

Die Figuren 1 bis 3 zeigen Ausführungsbeispiele von distanzmessenden optischen Sensoren 1, wobei die Distanzmessungen vorteilhaft nach einem Impuls-Laufzeitverfahren oder einem Phasenmessverfahren erfolgen.

Figur 1 zeigt ein Ausführungsbeispiel eines optischen Sensors 1 in Form eines Flächendistanzsensors, das heißt eines scannendes Distanzsensors. Zur Durchführung von Distanzmessungen weist der optische Sensor 1 einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor 1 für die Distanzbestimmungen ausgewertet werden.

Wie Figur 1 zeigt, sind die Sensorkomponenten der optischen Sensoren 1 in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor 1 erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Winkelspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

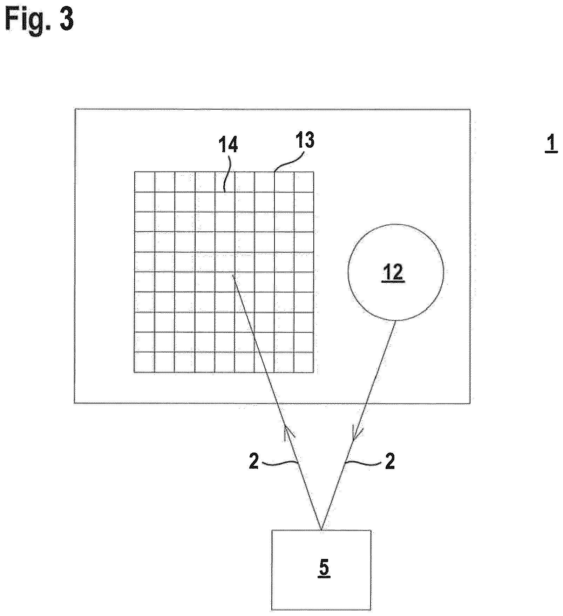

Figur 3 zeigt die Sensorkomponenten eines als Kamerasensor ausgebildeten optischen Sensors 1. Dieser optische Sensor 1 weist eine Lichtstrahlen 2 emittierende Beleuchtungseinheit 12 und als Empfänger 4 einen Bildsensor 13 auf, der in Form eines CCD- oder CMOS-Arrays mit einer matrixförmigen Anordnung von Empfangselementen 14 ausgebildet sein kann.

Generell weist jeder optische Sensor 1 eine nicht dargestellte Auswerteeinheit auf, in der die Empfangssignale des Empfängers 4 ausgewertet werden. Die Auswertung erfolgt derart, dass eine Schutzfeld-Überwachung durchgeführt wird und abhängig von einem Objekteingriff in einem Schutzfeld ein binäres Schaltsignal generiert wird, dessen Schaltzustände angeben, ob ein Objekt 5 im Schutzfeld 20 vorhanden ist oder nicht. Ist ein Objekt 5 im Schutzfeld 20 vorhanden, wird durch den entsprechenden Schaltzustand des Schaltsignals eine Sicherheitsfunktion derart ausgelöst, dass eine gefahrbringende Maschine stillgesetzt wird, sodass von dieser keine Gefahren mehr ausgehen können.

Für den Einsatz im Bereich der Sicherheitstechnik sind die optischen Sensoren 1 gemäß der Figuren 1 bis 3 als Sicherheitssensor ausgebildet und weisen einen fehlersicheren Aufbau auf, der beispielsweise durch eine redundante Auswerteeinheit in Form zweier sich zyklisch gegenseitig überwachender Rechnereinheiten realisiert werden könnte.

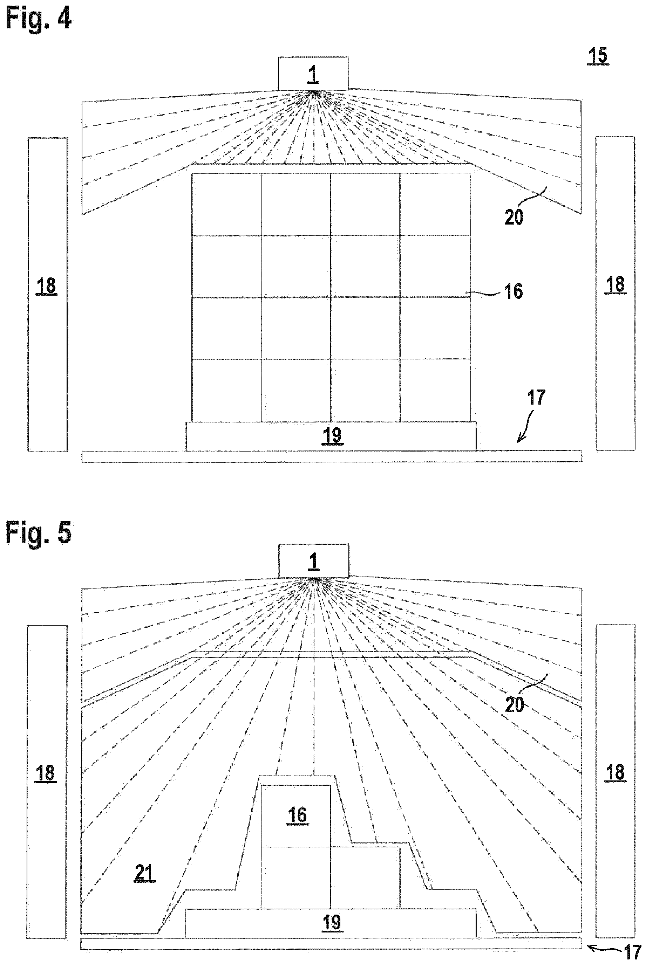

Die Figuren 4 und 5 zeigen ein erstes Ausführungsbeispiel der erfindungsgemäßen Vorrichtung 15, bei welcher generell ein optischer Sensor 1 gemäß den Figuren 1 bis 3 eingesetzt, wobei im vorliegenden Fall der optische Sensor 1 als Flächendistanzsensor ausgebildet ist.

Mit der Vorrichtung 15 wird eine Zugangssicherung zu einer nicht dargestellten, gefahrbringenden Maschine realisiert. Um Arbeitsvorgänge mit der Maschine ausführen zu können, muss dieser Fördergut 16 zugeführt werden. Hierzu ist eine Fördereinheit in Form eines Förderbands 17 vorgesehen, das seitlich durch Umzäunungen 18 geschützt ist.

Das Fördergut 16 wird auf Paletten 19 aufliegend auf dem Förderband 17 gefördert. Das Förderband 17 wird mit einer nicht dargestellten Steuerung gesteuert. Im regulären Betrieb wird das Förderband 17 über die Steuerung mit seiner vorgegebenen, vorzugsweise konstanten Geschwindigkeit bewegt.

Der optische Sensor 1 ist oberhalb des Förderbands 17 angeordnet. Im regulären Betrieb wird mit dem optischen Sensor 1 eine Schutzfeld-Überwachung innerhalb eines vorgegebenen Schutzfelds 20 überwacht, das in vertikaler Richtung und damit senkrecht zur Oberfläche des Förderbands 17 orientiert ist.

Das vorgegebene Schutzfeld 20 ist an die maximale Größe der Fördergüter, dargestellt in Figur 4, angepasst. Damit ist gewährleistet, dass alle Fördergüter als nicht gefahrbringende zulässige Objekte 5 ohne eine Verletzung des vorgegebenen Schutzfelds 20 und daher ohne Auslösen der Sicherheitsfunktion den optischen Sensor 1 passieren und der Maschine zugeführt werden können. Ein zusätzliches Eindringen sicherheitskritischer Objekte 5, insbesondere Personen, führt dagegen zu einer Schutzfeld-Verletzung und zur Auslösung der Sicherheitsfunktion.

Erfindungsgemäß wird bei einer Störung, insbesondere bei einem Förderstopp, in der Steuerung ein Steuersignal generiert, das in den optischen Sensor 1 eingelesen wird.

Darauf wird, wie Figur 5 zeigt, im optischen Sensor 1, durch einen Einlernvorgang ein neues Schutzfeld 21 als Erweiterung des vorgegebenen Schutzfelds 20 erzeugt. Auch das neue Schutzfeld 21 ist in vertikaler Richtung orientiert. Dabei wird die Kontur des aktuell in vom Empfangsbereich des optischen Sensors 1 vorhandenen Förderguts 16 als zulässiges Objekt 5 als mit dem optischen Sensor 1 erfasst und als Referenzkontur abgespeichert. Das daraus abgebildete neue Schutzfeld 21 stellt eine Erweiterung des vorgegebenen Schutzfelds 20 derart dar, dass mit dem neuen Schutzfeld 21 das im Erfassungsbereich des optischen Sensors 1 vorhandene Fördergut 16 exakt ausgespart wird.

Nach Aktivieren des Steuersignals und Bestimmen des neuen Schutzfelds 21 wird im optischen Sensor 1 die Objektüberwachung innerhalb des vorgegebenen Schutzfelds 20 deaktiviert und damit eine Objektüberwachung im neuen Schutzfeld 21 durchgeführt. Diese neue Objektüberwachung erfolgt nur temporär während einer vorgegebenen Aktivierungszeit. Die Aktivierungszeit entspricht vorteilhaft der Zeitdauer während der das Steuersignal aktiviert ist, das heißt für die Zeitdauer des Förderstopps.

Da das neue Schutzfeld 21 an die Kontur des im Erfassungsbereich des optischen Sensors 1 vorhandenen Förderguts 16 angepasst ist, ragt dieses nicht in das neue Schutzfeld 21 und führt nicht zu einer unnötigen Auslösung der Sicherheitsfunktion. Ein weiteres Objekt 5, insbesondere eine Person, die sich im Erfassungsbereich des optischen Sensors 1 aufhält, führt jedoch zu einer Verletzung des neuen Schutzfelds 21 und damit zur Auslösung der Sicherheitsfunktion.

Damit ist auch im Fall eines Förderstopps eine vollständige, sichere Überwachung des Zugangs zu der Maschine gewährleistet.

Nach Ablauf der Aktivierungszeit kehrt der optische Sensor 1 wieder in einen alten Überwachungsmodus zurück, das heißt es erfolgt wieder eine Überwachung innerhalb des vorgegebenen Schutzfelds 20.

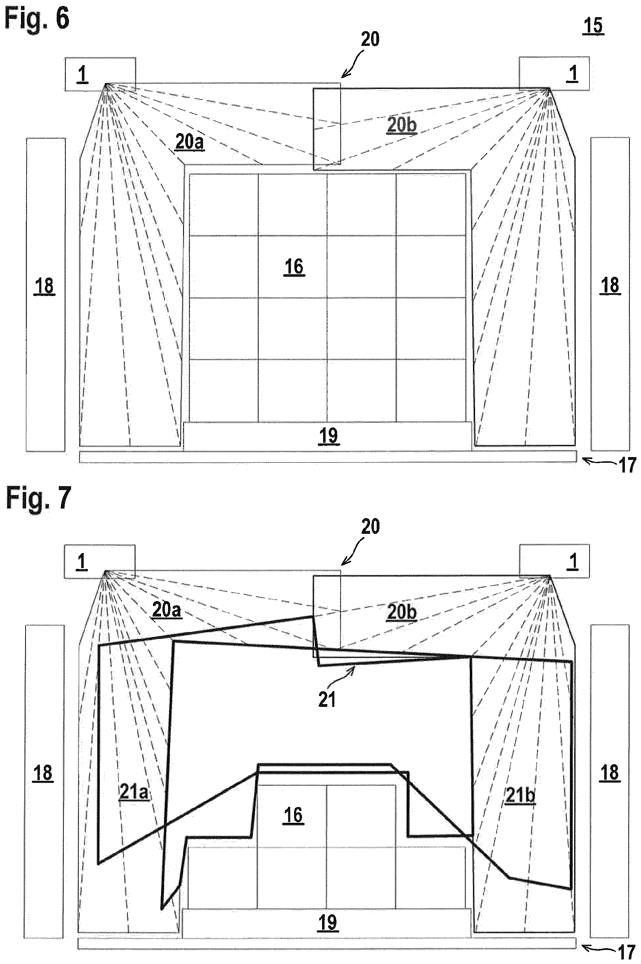

Die Figuren 6 und 7 zeigen eine Variante der Ausführungsform der Figuren 4 und 5.

Im Unterschied zur Ausführungsform gemäß den Figuren 4 und 5 sind bei der Ausführungsform der Figuren 6 und 7 zwei optische Sensoren 1 vorgesehen. Im regulären Betrieb werden mit den optischen Sensoren 1 zwei vorgegebene Teilschutzfelder 20a, b überwacht, die sich zu dem vorgegebenen Schutzfeld 20 ergänzen (Figur 6). Ist das Steuersignal aktiviert, werden für die beiden optischen Sensoren 1 neue Teilschutzfelder 21a, b bestimmt, die sich zu den neuen Schutzfeldern 21 ergänzen, bei welchen wieder das aktuell vorhandene Fördergut 16 angepasst ist (Figur 7).

Die in den optischen Sensoren 1 generierten Schaltsignale, die Objekteingriffe in den einzelnen Teilschutzfeldern melden, werden in einer nicht dargestellten übergeordneten Auswerteeinheit zusammengeführt, vorzugsweise logisch verknüpft. Mit dem dadurch erhaltenen Schaltsignal wird dann die Maschine gesteuert, insbesondere die Sicherheitsfunktion ausgelöst. Ansonsten erfolgt die Überwachung entsprechend zur Ausführungsform der Figuren 4 und 5.

### Bezugszeichenliste

- (1): Optischer Sensor
- (2): Lichtstrahlen
- (3): Sender
- (4): Empfänger
- (5): Objekt
- (6): Gehäuse
- (7): Empfangsoptik
- (8): Ablenkeinheit
- (9): Umlenkspiegel
- (10): Messkopf
- (11): Sockel
- (12): Beleuchtungseinheit
- (13): Bildsensor
- (14): Empfangselement
- (15): Vorrichtung
- (16): Fördergut
- (17): Förderband
- (18): Umzäunung
- (19): Palette
- (20): Schutzfeld
- (20a,b): Teilschutzfeld
- (21): Schutzfeld
- (21a,b): Teilschutzfeld

## Patentansprüche

1. Vorrichtung (15) zur Sicherung eines Gefahrenbereichs, mit wenigstens einem distanzmessenden optischen Sensor (1), der für eine Objekterfassung in einem flächigen oder räumlichen Erfassungsbereich ausgebildet ist, wobei zur Absicherung des Gefahrenbereichs mit dem optischen Sensor (1) eine Objektüberwachung innerhalb wenigstens eines vorgegebenen Schutzfelds (20) durchgeführt wird, **dadurch gekennzeichnet, dass** mittels eines Steuersignals die Objektüberwachung im vorgegebenen Schutzfeld (20) deaktivierbar ist, und dass abhängig von einem im Gefahrenbereich vorhandenen Objekt (5) wenigstens ein neues Schutzfeld (21) generiert wird, innerhalb dessen der optische Sensor (1) die Objektüberwachung weiterführt, und dass das neue Schutzfeld (21) für eine vorgegebene Aktivierungszeit deaktiviert ist, und dass nach Ablauf der Aktivierungszeit der optische Sensor (1) wieder die Objektüberwachung innerhalb des vorgegebenen Schutzfelds (20) durchführt.

2. Vorrichtung (15) nach Anspruch 1, **dadurch gekennzeichnet, dass** mittels des Steuersignals die Objektüberwachung nur dann deaktiviert wird, wenn kein Objekteingriff im vorgegebenen Schutzfeld (21) vorhanden ist.

3. Vorrichtung (15) nach einem der Ansprüche 1 oder 2, **dadurch gekennzeichnet, dass** das neue Schutzfeld (21) größer ist als das vorgegebene Schutzfeld (20).

4. Vorrichtung (15) nach einem der Ansprüche 1 bis 3, **dadurch gekennzeichnet, dass** die Größe des neuen Schutzfelds (20) an die Größe des im Gefahrenbereich vorhandenen Förderguts (16) angepasst ist.

5. Vorrichtung (15) nach einem der Ansprüche 1 bis 4, **dadurch gekennzeichnet, dass** bei Aktivieren des Steuersignals mittels des optischen Sensors (1) die Kontur des im Gefahrenbereich vorhandenen Förderguts (16) als Referenzkontur eingelernt wird, und dass abhängig von der Referenzkontur die Grenze des neuen Schutzfelds (21) bestimmt wird.

6. Vorrichtung (15) nach einem der Ansprüche 1 bis 5, **dadurch gekennzeichnet, dass** die Aktivierungszeit der Zeitdauer der Aktivierung des Steuersignals entspricht.

7. Vorrichtung (15) nach einem der Ansprüche 1 bis 6, **dadurch gekennzeichnet, dass** das Steuersignal in einer externen Steuerung generiert wird.

8. Vorrichtung (15) nach Anspruch 7, **dadurch gekennzeichnet, dass** die Steuerung eine Fördereinheit steuert, auf welchem Fördergut (16) gefördert wird, das von dem optischen Sensor (1) erfasst wird.

9. Vorrichtung (15) nach einem der Ansprüche 1 bis 8, **dadurch gekennzeichnet, dass** im optischen Sensor (1) ein Schaltsignal generiert wird, dessen Schaltzustände angeben, ob sich ein Objekt (5) im Schutzfeld (20) befindet oder nicht.

10. Vorrichtung (15) nach Anspruch 9, **dadurch gekennzeichnet, dass** mit einem im Schutzfeld (20) vorhandenen Objekt (5) signalisierenden Schaltsignal eine Sicherheitsfunktion ausgelöst wird.

11. Vorrichtung (15) nach einem der Ansprüche 1 bis 10, **dadurch gekennzeichnet, dass** der optische Sensor (1) ein Flächendistanzsensor oder ein Kamerasensor ist.

12. Vorrichtung (15) nach einem der Ansprüche 1 bis 11, **dadurch gekennzeichnet, dass** der optische Sensor (1) ein Sicherheitssensor ist.

13. Vorrichtung (15) nach einem der Ansprüche 1 bis 12, **dadurch gekennzeichnet, dass** eine Mehrfachanordnung von optischen Sensoren (1) vorgesehen ist.

14. Vorrichtung (15) nach einem der Ansprüche 1 bis 13, **dadurch gekennzeichnet, dass** mit einem optischen Sensor (1) ein oder mehrere Schutzfelder (20, 21) überwacht werden.

15. Vorrichtung (15) nach einem der Ansprüche 1 bis 14, **dadurch gekennzeichnet, dass** mit dieser eine Zugangssicherung realisiert ist.

## Claims

1. A device (15) for securing a hazardous area, having at least one distance-measuring optical sensor (1) which is designed for object detection in a planar or spatial detection area, said object monitoring being carried out within at least one predetermined protective field (20) in order to secure the hazardous area with the optical sensor (1), **characterised in that** the object monitoring in the predetermined protective field (20) can be deactivated by means of a control signal, and **in that**, depending on an object (5) present in the hazardous area, at least one new protective field (21) is generated, within which the optical sensor (1) continues said object monitoring, and **in that** the new protective field (21) is deactivated for a predetermined activation time, and **in that**, after the activation time has elapsed, the optical sensor (1) again carries out said object monitoring within the predetermined protective field (20).

2. A device (15) according to claim 1, **characterised in that** the object monitoring is only deactivated by means of the control signal if there is no object intervention in the predetermined protective field (21).

3. A device (15) according to one of claims 1 or 2, **characterised in that** the new protective field (21) is larger than the predetermined protective field (20).

4. A device (15) according to one of claims 1 to 3, **characterised in that** the size of the new protective field (20) is adapted to the size of the conveyed material (16) present in the hazardous area.

5. A device (15) according to one of the claims 1 to 4, **characterised in that**, when the control signal is activated by means of the optical sensor (1), the contour of the conveyed material (16) present in the hazardous area is taught in as a reference contour, and **in that** the boundary of the new protective field (21) is determined as a function of the reference contour.

6. A device (15) according to one of claims 1 to 5, **characterised in that** the activation time corresponds to the duration of the activation of the control signal.

7. A device (15) according to any one of claims 1 to 6, **characterised in that** the control signal is generated in an external controller.

8. A device (15) according to claim 7, **characterised in that** the control system controls a conveyor unit on which material (16) is conveyed that is detected by the optical sensor (1).

9. A device (15) according to one of claims 1 to 8, **characterised in that** a switching signal is generated in the optical sensor (1), the switching states of which indicate whether or not an object (5) is located in the protective field (20).

10. A device (15) according to claim 9, **characterised in that** a safety function is triggered with a switching signal signalling an object (5) present in the protective field (20).

11. A device (15) according to one of claims 1 to 10, **characterised in that** the optical sensor (1) is an area distance sensor or a camera sensor.

12. A device (15) according to any one of claims 1 to 11, **characterised in that** the optical sensor (1) is a safety sensor.

13. A device (15) according to one of claims 1 to 12, **characterised in that** a multiple arrangement of optical sensors (1) is provided.

14. A device (15) according to one of claims 1 to 13, **characterised in that** one or more protective fields (20, 21) are monitored with an optical sensor (1).

15. A device (15) according to one of claims 1 to 14, **characterised in that** an access guard is realised with this device.

## Revendications

1. Dispositif (15) de sécurisation d'une zone dangereuse, comportant au moins un capteur optique de mesure de distance (1) conçu pour la détection d'objets dans une zone de détection plane ou spatiale, ladite surveillance d'objets étant effectuée dans au moins un champ de protection prédéterminé (20) afin de sécuriser la zone dangereuse avec le capteur optique (1), **caractérisé en ce que** la surveillance d'objets dans le champ de protection prédéterminé (20) peut être désactivée à l'aide d'un signal de commande, et **en ce que**, en fonction d'un objet (5) présent dans la zone dangereuse, au moins un nouveau champ de protection (21) est généré, à l'intérieur duquel le capteur optique (1) poursuit ladite surveillance d'objet, et **en ce que** le nouveau champ de protection (21) est désactivé pendant un temps d'activation prédéterminé, et **en ce que**, une fois le temps d'activation écoulé, le capteur optique (1) effectue à nouveau ladite surveillance d'objet à l'intérieur du champ de protection prédéterminé (20).

2. Dispositif (15) selon la revendication 1, **caractérisé en ce que** la surveillance des objets n'est désactivée au moyen du signal de commande que s'il n'y a pas d'intervention d'un objet dans le champ de protection prédéterminé (21).

3. Dispositif (15) selon l'une des revendications 1 ou 2, **caractérisé en ce que** le nouveau champ de protection (21) est plus grand que le champ de protection prédéterminé (20).

4. Dispositif (15) selon l'une des revendications 1 à 3, **caractérisé en ce que** la taille du nouveau champ de protection (20) est adaptée à la taille du produit transporté (16) présent dans la zone dangereuse.

5. Dispositif (15) selon l'une des revendications 1 à 4, **caractérisé en ce que**, lorsque le signal de commande est activé au moyen du capteur optique (1), le contour du matériau transporté (16) présent dans la zone dangereuse est appris comme contour de référence, et **en ce que** la limite du nouveau champ de protection (21) est déterminée en fonction du contour de référence.

6. Dispositif (15) selon l'une des revendications 1 à 5, **caractérisé en ce que** le temps d'activation correspond à la durée de l'activation du signal de commande.

7. Dispositif (15) selon l'une des revendications 1 à 6, **caractérisé en ce que** le signal de commande est généré par un contrôleur externe.

8. Dispositif (15) selon la revendication 7, **caractérisé en ce que** le système de commande contrôle une unité de transport sur laquelle est transporté le matériau (16) détecté par le capteur optique (1).

9. Dispositif (15) selon l'une des revendications 1 à 8, **caractérisé en ce qu'**un signal de commutation est généré dans le capteur optique (1), dont les états de commutation indiquent si un objet (5) se trouve ou non dans le champ de protection (20).

10. Dispositif (15) selon la revendication 9, **caractérisé par le fait qu'**une fonction de sécurité est déclenchée par un signal de commutation signalant un objet (5) présent dans le champ de protection (20).

11. Dispositif (15) selon l'une des revendications 1 à 10, **caractérisé en ce que** le capteur optique (1) est un capteur de distance de zone ou un capteur de caméra.

12. Dispositif (15) selon l'une des revendications 1 à 11, **caractérisé en ce que** le capteur optique (1) est un capteur de sécurité.

13. Dispositif (15) selon l'une des revendications 1 à 12, **caractérisé par** un agencement multiple de capteurs optiques (1).

14. Dispositif (15) selon l'une des revendications 1 à 13, **caractérisé par le fait qu'**un ou plusieurs champs de protection (20, 21) sont surveillés à l'aide d'un capteur optique (1).

15. Dispositif (15) selon l'une des revendications 1 à 14, **caractérisé par** la réalisation d'un protecteur d'accès à l'aide de ce dispositif.
